# NEW EUROPEAN PATENT SPECIFICATION

(11) **EP 0 925 240 B2**
(45) Date of publication and mention of the opposition decision: **15.09.2004**
(45) Mention of the grant of the patent: 03.05.2000
(21) Application number: 97942904.0
(22) Date of filing: 02.09.1997
(51) Int. Cl.: B65D 88/52, A01C 15/00

(54) **A MACHINE FOR SPREADING GRANULAR MATERIALS, PARTICULARLY FERTILIZERS**
MASCHINE ZUM VERSTREUEN KÖRNIGER STOFFE, INSBESONDERE DÜNGER
MACHINE POUR EPANDRE DES MATERIAUX GRANULAIRES, EN PARTICULIER DES ENGRAIS

(30) Priority: 06.09.1996 IT PD960216
(43) Date of publication of application: 30.06.1999
(73) Proprietor: Agrex S.p.A., 35010 Curtarolo (IT)
(72) Inventor: BARBIERI, Silvano, I-35010 Curtarolo (IT)
(74) Representative: Cantaluppi, Stefano
(86) International application number: PCT/EP1997/004776
(87) International publication number: WO 1998/009890

(56) References cited:
- EP-A- 0 048 577
- DE-A- 4 405 479
- DE-U- 9 006 446
- FR-A- 2 350 282
- US-A- 4 460 214

## Description

### Technical field

The present invention relates to a machine for spreading granular materials, particularly fertilizers, according to the preamble to the main Claim 1. Such a machine is known for instance from a leaflet concerning the Nodet Gougis Fertilizer Precilarge DR 612/617 which is also cited in EP-A-0 292 872. DE-A-4 405 479 is also prior art of the present invention.

The invention was devised for application to a machine for spreading fertilizer. However, it is not limited to a machine of this type but is equally applicable to machines for spreading salt, sand, rice, seeds and other mineral and chemical products.

### Background art

Machines including the features indicated above are known in the specific field of fertilizer- and manure-spreading by the term "manure spreaders". They generally comprise a hopper for holding the bulk material and a centrifugal spreader disposed below the hopper and including one or more rotary spreader disks.

The hopper and the spreader are normally mounted on a frame having elements for coupling to a tractor, typically a three-point coupling, or are intended to be towed on a trailer.

The material to be spread is supplied by falling from the hopper onto each spreader disk and is spread by the centrifugal effect caused by rapid rotation of the disks.

One of the problems encountered in these machines is connected with their general size which in turn causes, amongst other things, transportation and storage difficulties. In this connection, it is known to produce hoppers which can be taken off the frame but, particularly with large-capacity hoppers, this does not enable these structures to be transported easily.

### Disclosure of the Invention

The technical problem upon which the invention is based is that of providing a machine for spreading granular materials, particularly fertilizers, which is designed structurally and functionally to prevent all of the problems complained of with reference to the prior art mentioned.

This problem is solved, according to the invention, by a machine of the type indicated at the beginning, having the features defined in the appended claims.

### Brief description of drawings

The characteristics and advantages of the invention will become clearer from the following detailed description of a preferred embodiment thereof, given by way of non-limiting example with reference to the appended drawings, in which:
Figure 1 is a perspective view of a machine for spreading fertilizers, formed in accordance with the present invention,
Figure 2 is an exploded, perspective view of the machine of Figure 1.

### Best mode of carrying out the invention

In the drawings, a machine for spreading fertilizers and manure, formed in accordance with the present invention, is generally indicated 1.

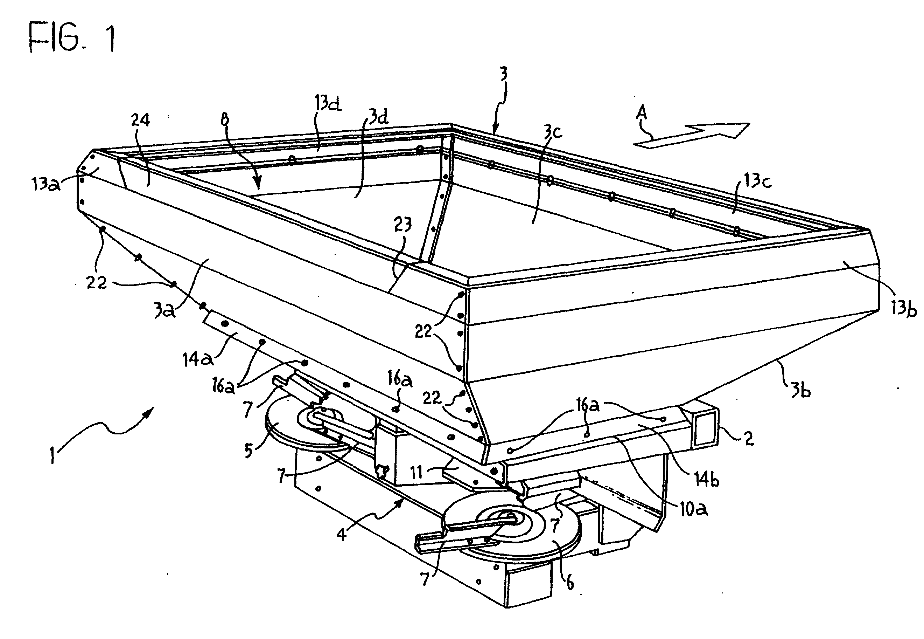

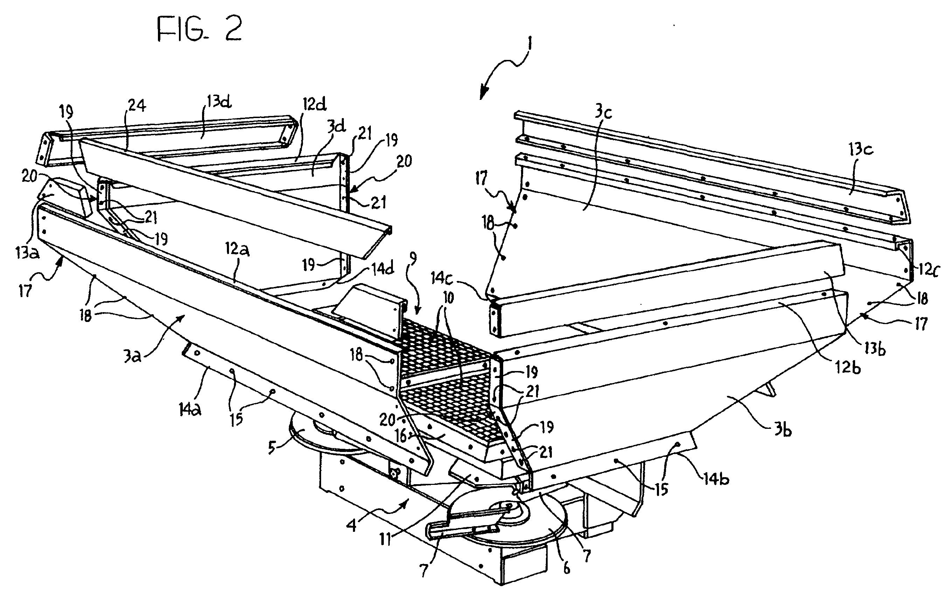

The machine 1 comprises a support frame 2 provided, in known manner, with an element (not shown) for coupling to a tractor, for example, a so-called "three-point coupling". The direction of forward movement of the machine on the ground is indicated by the arrow A in Figures 1 and 2.

The frame 2 supports a hopper 3 for holding the fertilizer or other bulk granular material and a spreader, generally indicated 4, for spreading the fertilizer on the ground whilst the machine 1 is moving forwards.

The spreader 4 is mounted below the hopper 3 and is of conventional type. It comprises a pair of spreader disks 5, 6 which are rotated in opposite directions. The positions of the disks 5, 6 are such that the fertilizer is supplied by falling from the hopper 3 onto the disks 5, 6 so as to be spread as a result of the centrifugal effect brought about by the rotation of the disks. Each disk 5, 6 also has a pair of spreader blades 7 for guiding the granules of fertilizer at least partially on the trajectory on which they are expelled by the corresponding disk 5, 6 so as to ensure greater precision and uniformity of scattering.

The hopper 3 comprises four walls 3a, 3b, 3c, 3d jointly defining an upper opening 8 for the loading of the fertilizer and a lower outlet 9 through which the fertilizer is supplied to the spreader disks 5, 6.

Grids 10 are mounted on the frame 2 between the outlet 9 of the hopper and the disks 5, 6. There is also provision for adjustment of the opening of the outlet 9 by means of closure plates 11, shown partially in the drawings and operated by a selector device for selecting a predetermined opening/closure of the outlet corresponding to a predetermined dosage of the fertilizer.

The walls 3a-d are of similar structure, such as that shown in Figure 2, and are made of bent sheet metal of a suitable thickness. The walls 3a-d have respective channel-shaped bent free edges 12a-d adjacent the load opening 8 of the hopper and are inclined so as to converge towards the outlet 9, typically with a frusto-pyramidal shape. This shape advantageously enables manure and fertilizers in powder form also to be spread with hoppers of lesser height.

There is also provision for the useful load space of the hopper 3 to be increased by means of side panels 13a-d arranged as extensions of the respective walls 3a-d. Each side panel 13a-d is flange-mounted on the corresponding wall 3a-d, on its respective edge 12a-d. In addition, pairs of adjacent side panels 13a-d are joined together by means of corresponding flanges at their longitudinally opposite ends.

Each wall 3a-d has, at the lower edge of the hopper, a respective flange 14a-d for superimposition on a corresponding flange 16 formed on the frame 2, the flanges 14a-d having holes, drilled at regular intervals and all indicated 15, for screws 16a by means of which each wall 3a-d is connected releasably to the frame 2.

According to a main feature of the invention, the walls 3a-d are structurally independent of one another and are connected to one another releasably in the manner explained below.

The opposed walls 3a and 3c have flanges 17 with holes, drilled at regular intervals and all indicated 18, along opposed vertical sides, that is, the sides extending between the load opening 8 and the outlet 9.

The opposed walls 3b and 3d have, on their corresponding vertical sides, respective lips 19, preferably produced by bending of the corresponding wall, and forming flange portions 20 which can be superimposed on the flanges 17 of the walls 3a, 3c. The flange portions 20 have holes 21 arranged at regular intervals so as to coincide with the holes 18 of the flanges 17 so that the pairs of adjacent walls 3a,3b, 3b,3c, 3c,3d and 3d,3a can be connected to one another by means of screws, all indicated 22, or similar fixing means.

To facilitate the loading of the fertilizer in the hopper, according to a further characteristic of the invention, there is provision for the wall 3a opposite the wall 3c facing the tractor to have a recess 23 adjacent the load opening 8 and closable by an additional side panel 24 fixed releasably to the wall 3a. Preferably, the recess 23 is formed in the corresponding side panel 13a and the additional closure side panel 24 is constituted by a portion of the side panel 13a.

Amongst the main advantages of the machine of the invention is the fact that the walls of the hopper can be completely disassembled, thus reducing the size and bulk of the machine during transportation; moreover, the fixing system provided between the walls facilitates the assembly and disassembly of the hopper which can therefore also be carried out by the final user.

In particular, when the machine is being transported, savings can be achieved owing to a size more than 50% smaller than that of conventional machines. Similar advantages are achieved when the parts making up the machine are stored in a store.

The invention also facilitates the equipping of a machine having the same frame with hoppers of different capacities or the conversion of an existing machine into corresponding models of larger or smaller capacity.

## Claims

1. A machine for spreading granular materials, particularly fertilizers, comprising a load-bearing frame (2), a hopper (3) supported by the frame for holding the granular material, and a spreader (4), mounted on the frame (2) below the hopper (3), for spreading on the ground the granular material which is supplied by falling from the hopper, the hopper (3) comprising structurally independent walls (3a, 3b, 3c, 3d) attached to each other, **characterised in that** the walls of the hopper have, on the opposite longitudinal side to the free edge of the hopper (3), respective flanges (14a-d) bent from the respective wall for superimposition on corresponding flanges (16) provided on the frame (2) in order to releasably fix the walls of the hopper (3) to the frame.

2. A machine according to Claim 1, in which pairs of adjacent walls (3a, 3b, 3c, 3d) of the hopper (3) are connected to one another releasably.

3. A machine according to Claim 2, in which flanges (17, 20) are provided on the hopper (3) along adjoining sides of adjacent walls (3a-d), the walls being joined together in the region of the flanges, where they are connected to one another by fixing means (22).

4. A machine according to one or more of the preceding claims, in which the hopper (3) comprises side panels (13a-d) arranged as extensions of the walls (3a-d), the side panels being structurally independent of one another and of the walls and being connected releasably to the walls.

5. A machine according to one or more of the preceding claims, in which at least one (3a) of the walls has, adjacent the free edge of the hopper (3), a recess (23) and an additional side panel (24) associated releasably with the wall (3a) in order to close the recess (23).

6. A machine according to Claims 4 and 5, in which the recess (23) is formed in one of the side panels (13a-d) and the additional side panel (24) is constituted by at least one portion of the side panel.

## Patentansprüche

1. Vorrichtung zum Streuen körniger Stoffe, insbesondere Düngemittel, die einen lasttragenden Rahmen (2), eine von dem Rahmen getragenen Trichter (3), der das Düngemittel enthält, und einen auf den Rahmen (2) unter dem Trichter (3) montierten Steuer (4) zum Streuen des körnigen Stoffes auf den Boden, wobei dieses aus dem Trichter fallend nachgeliefert wird, aufweist, wobei der Trichter (3) strukturell unabhängige Wände (3a, 3b, 3c, 3d) aufweist, die miteinander verbunden sind, **dadurch gekennzeichnet, dass** die Wände des Trichters auf der dem freien Rand des Trichters (3) gegenüberliegenden Seite jeweils Flansche (14a-d) aufweisen, die zur Übereinanderlagerung mit entsprechenden am Rahmen (2) angeordneten Flanschen (16) von der jeweiligen Wand abgebogen sind, um die Wände des Trichters (3) lösbar am Rahmen zu befestigen

2. Vorrichtung nach Anspruch 1, bei welcher benachbarte Wände (3a, 3b, 3c, 3d) des Trichters (3) paarweise lösbar miteinander verbunden sind.

3. Vorrichtung nach Anspruch 2, bei welcher Flansche (17, 20) auf dem Trichter (3) längs angrenzend.er Seiten von benachbarten Wänden. (3a-d) angeordnet und die Wände im Bereich der Flansche durch Befestigungsmittel (22) miteinander verbunden sind.

4. Vorrichtung nach einem oder mehreren der vorhergehenden Ansprüche, bei welcher der Trichter (3) Seitenplatten (13a-d) aufweist, die als Anbauten der Wände (3a-d) angeordnet sind, wobei die Seitenplatten voneinander und von den Wänden strukturell unabhängig und lösbar mit den Wänden verbunden sind.

5. Vorrichtung nach einem oder mehreren der vorhergehenden Ansprüche, bei welcher wenigstens eine (3a) der Wände, dem freien Rand des Trichters (3) angrenzend, eine Aussparung (23) und eine zusätzliche Seitenplatte (24) aufweist, die lösbar mit der Wand (3a) verbunden ist, um die Aussparung (23) zu verschließen.

6. Vorrichtung nach den Ansprüchen 4 und 5, bei welcher die Aussparung (23) in einer der Seitenplatten (13a-d) ausgebildet ist und die zusätzliche Seitenplatte (24) durch wenigstens einen Teil der Seitenplatte gebildet wird.

## Revendications

1. Machine destinée à épandre des matériaux granulaires, notamment des engrais, comprenant un châssis (2) de support de charges, une trémie (3) supportée par le châssis et destinée à contenir l'engrais, et un organe d'épandage (4) monté sur le châssis (2) sous la trémie (3) pour épandre sur le sol le matériau granulaire qui est transmis par chute depuis la trémie, la trémie (3) comportant des parois de structures indépendantes (3a, 3b, 3c, 3d) fixées les unes aux autres, **caractérisée en ce que** les parois ont, du côté longitudinal opposé au bord libre de la trémie (3), des flasques respectifs (14a-d) courbés depuis la paroi respective afin qu'ils soient superposés à des flasques correspondants (16) disposés sur le châssis (2) pour la fixation amovible des parois de la trémie (3) sur le châssis.

2. Machine selon la revendication 1, dans laquelle les paires de parois adjacentes (3a, 3b, 3c, 3d) de la trémie (3) sont raccordées mutuellement de façon amovible.

3. Machine selon la revendication 2, dans laquelle des flasques (17, 20) sont disposés sur la trémie (3) le long de côtés adjacents de parois adjacentes (3a-3d), les parois étant raccordées mutuellement dans la région des flasques aux endroits où elles sont raccordées mutuellement par des dispositifs de fixation (22).

4. Machine selon l'une ou plusieurs des revendications précédentes, dans laquelle la trémie (3) comprend des panneaux latéraux (13a-d) placés comme prolongement des parois (3a-d), les panneaux latéraux ayant des structures indépendantes les unes des autres et des parois et étant raccordés de façon amovible aux parois.

5. Machine selon l'une ou plusieurs des revendications précédentes, dans laquelle l'une au moins (3a) des parois possède, près du bord libre de la trémie (3), une cavité (23) et un panneau latéral supplémentaire (24) associé de façon amovible à la paroi (3a) pour fermer la cavité (23).

6. Machine selon les revendications 4 et 5, dans laquelle la cavité (23) est formée dans l'un des panneaux latéraux (13a-d) et le panneau latéral supplémentaire (24) est constitué par une partie au moins du panneau latéral.
